# EUROPÄISCHE PATENTANMELDUNG

(11) **EP 1 245 639 A1**
(43) Veröffentlichungstag der Anmeldung: **02.10.2002**
(21) Anmeldenummer: 02006539.7
(22) Anmeldetag: 20.03.2002
(51) Int. Cl.: C08L 75/06, C08G 18/08, C08G 18/28, C08G 18/32, C08G 18/42, C08G 18/72

(54) **Lichtstabile thermoplastische Polyurethane, Verfahren zu ihrer Herstellung und ihre Verwendung**

(30) Priorität: 28.03.2001 DE 10115224
(71) Anmelder: BAYER AG, 51368 Leverkusen (DE)
(72) Erfinder: Müller, Hanns-Peter, Dr., 51519 Odenthal (DE); Gruttmann, Horst, 51375 Leverkusen (DE); Kaufhold, Wolfgang, Dr., 51061 Köln (DE); Peerlings, Henricus, Dr., 42699 Solingen (DE)

(57) **Zusammenfassung**

Die Erfindung betrifft lichtstabile, aliphatische, thermoplastische Polyurethanelastomermischungen, die überwiegend aus thermoplastischen Polyurethanen mit hohen Molekulargewichten und in geringen Mengen thermoplastischen Polyurethanen mit niedrigen Molekulargewichten bestehen, ihre Herstellung und ihre Verwendung.

## Beschreibung

Die vorliegende Erfindung betrifft neue thermoplastische, lichtstabile, aliphatische Polyurethanmischungen, Verfahren zu ihrer Herstellung und ihre Verwendung.

Thermoplastische Polyurethane (TPU) sind von großer technischer Bedeutung, weil sie gute Elastomereigenschaften besitzen und thermoplastisch verarbeitet werden können. Durch geeignete Auswahl der Komponenten lässt sich eine große Variationsbreite mechanischer Eigenschaften erzielen. Eine Übersicht über TPU, ihre Eigenschaften und Anwendungen wird z.B. in Kunststoffe 68 (1978), S. 819 - 825, in Kautschuk, Gummi, Kunststoffe 35 (1982) S. 569 - 584 und bei G. Becker, D. Braun, Kunststoff-Handbuch, Bd. 7 "Polyurethane", München, Wien, Carl Hanser Verlag 1983 gegeben. Einen Überblick über die Herstellverfahren findet man in Plastverarbeiter 40 (1989).

TPU werden aus zumeist linearen Polyolen (Makrodiolen), wie Polyester- oder Polyetherdiolen, organischen Diisocyanaten und kurzkettigen zumeist difünktionellen Alkoholen (Kettenverlängerern) aufgebaut. Sie können kontinuierlich oder diskontinuierlich hergestellt werden. Die bekanntesten Herstellverfahren sind das Bandverfahren und das Extruderverfahren.

Üblicherweise verwendet man zum Aufbau von TPU aromatische Diisocyanate. Aromatische TPU sind aber nicht lichtstabil. In jüngster Zeit gewinnen die an sich schon lange bekannten aliphatischen TPU an Bedeutung, da diese bei Lichteinwirkung nicht vergilben und selbst bei schwarzen Farbeinstellungen nicht zu einer Farb- oder Glanzgradveränderung während des Gebrauchs neigen.

In US-A 5 824 738 wird ein lichtstabiles, aliphatisches TPU beschrieben, das sich auch nach intensiver künstlicher Bewitterung durch eine sehr geringe Vergilbung auszeichnet. Dieses lichtstabile TPU auf Basis von H₁₂-MDI hat indessen den Nachteil, dass es nur eine relativ geringe Wärmestabilität aufweist.

In EP-A 1 010 712 werden sowohl licht- wie auch wärmestabile thermoplastische Polyurethanelastomere beschrieben, die aufgrund ihres speziellen Aufbaus die Anforderungen an Lichtechtheit und Wärmestabilität erfüllen. Nachteilig an diesen lichtechten TPU ist die geringe Kristallisationstendenz der aufgeschmolzenen TPU.

Zur Herstellung von dekorativen Folien und Spritzgussteilen oder insbesondere zur Herstellung von Flächengebilden aus schmelzbaren, sinterfähigen Pulvern werden von den Anwendern weiche, licht- und wärmestabile TPU-Rohstoffe gefordert, welche bei der Verarbeitung aus der Schmelze gut verlaufen und beim Abkühlen rasch kristallisieren. Diese Eigenschaften erfüllen die Produkte des Standes der Technik nur unzureichend.

Aufgabe der vorliegenden Erfindung war es daher, aliphatische, weiche, lichtechte TPU mit schneller Kristallisation beim Abkühlen zur Verfügung zu stellen, die ohne Komplikationen zu Artikeln extrudiert, gespritzt und geblasen werden können.

Diese Aufgabe konnte mit den im folgenden ausführlich beschriebenen erfindungsgemäßen Mischungen gelöst werden. Es wurde überraschenderweise gefunden, dass der Zusatz eines niedermolekularen TPU auf Basis von Hexamethylendiisocyanat (HDI) zu einem geschmolzenen, lichtechten TPU zu einem frühen Kristallisationsbeginn beim Abkühlen führt und dadurch den Verarbeitungsprozess wesentlich vereinfacht.

Wider Erwarten geht durch den Zusatz der niedermolekularen TPU die gute Wärmestabilität der lichtechten TPU nicht verloren, obwohl eine Schmelzflussemiedrigung eintritt. Durch den Einsatz der im folgenden näher beschriebenen erfindungsgemäßen Mischungen wird die Verarbeitungsfähigkeit und die Wärmestabilität wesentlich verbessert.

Gegenstand der vorliegenden Erfindung sind daher lichtstabile, thermoplastische, aliphatische Polyurethanelastomermischungen bestehend aus 80 bis 98 Gew.-% eines aliphatischen, thermoplastischen Polyurethans (TPU Y), erhältlich aus gegebenenfalls unter Zugabe von Katalysatoren
A) 100 bis 60 mol-% bevorzugt 100 bis 80 mol-% Hexamethylendiisocyanat (HDI) und 0 bis 40 mol-%, bevorzugt 0 bis 20 mol-% anderen aliphatischen Diisocyanaten,
B) Polyolen, bevorzugt difunktionellen Polyesterdiolen mit einem zahlenmittleren Molekulargewicht von 600 bis 5000 g/mol, vorzugsweise von 700 bis 4200 g/mol, und
C) Kettenverlängerern mit einem mittleren Molekulargewicht von 60 bis 500 g/mol
gegebenenfalls unter Zugabe von UV-Stabilisatoren D) in einer Menge von 0,4 bis 0,9 Gew.-%, bevorzugt 0,4 bis 0,8 Gew.-%, bezogen auf [A) + B) + C)], und weiteren üblichen Hilfs- und Zusatzstoffen (F),
wobei das Äquivalenzverhältnis von A) zu B) zwischen 1,5 : 1,0 und 6,0 : 1,0 beträgt und wobei die Kennzahl (gebildet aus dem mit 100 multiplizierten Quotienten der Äquivalentverhältnisse von Isocyanatgruppen und der Summe der Hydroxylgruppen aus Polyol und Kettenverlängerungsmittel) 95 bis 105 beträgt,
und 2 bis 20 Gew.-% eines niedermolekularen thermoplastischen Polyurethans (TPU X) erhältlich aus
G) Hexamethylendiisocyanat (HDI),
H) Diolen mit einem zahlenmittleren Molekulargewicht von 62 bis 300 g/mol und
I) monofunktionellen Alkoholen als Kettenabbrecher mit einem Molekulargewicht von 32 bis 300 g/mol,
wobei das Molverhältnis von G) zu H) zwischen 2 : 1 und 1,05 : 1, bevorzugt 1,7 : 1 bis 1,2 : 1 beträgt und wobei die Kennzahl (gebildet aus dem mit 100 multiplizierten Quotienten der Äquivalentverhältnisse von Isocyanatgruppen aus G) und der Summe der Hydroxylgruppen aus H) und I) 99 bis 101 beträgt.

Bevorzugt hat das TPU Y ein zahlenmittleres Molekulargewicht von 20.000 g/mol bis 100.000 g/mol. Das TPU X hat vorzugsweise ein zahlenmittleres Molekulargewicht von 462 g/mol bis 6000 g/mol.

Besonders bevorzugt enthält das TPU Y 13 bis 21 Gew.-%, vorzugsweise 14 bis 18 Gew.-% Hartsegment (berechnet aus der eingesetzten Menge an Diisocyanat A) und Kettenverlängerer C), bezogen auf die Gesamtmasse TPU Y).

Ein weiterer Gegenstand der Erfindung ist ein Verfahren zur Herstellung der lichtstabilen, thermoplastischen Polyurethanelastomermischungen gemäß den Ansprüchen 1 bis 3, dadurch gekennzeichnet, dass B) und C) kontinuierlich oder diskontinuierlich gemischt werden und danach mit A) intensiv vermischt werden und vor, während oder bevorzugt nach der Reaktion der Komponenten A), B) und C) in einem Extruder das separat hergestellte TPU X zugegeben wird und das so erhaltene Produkt gegebenenfalls granuliert wird.

Bevorzugt wird das erfindungsgemäße Verfahren so durchgeführt, dass die Reaktion zur Herstellung des TPU Y in Gegenwart eines Katalysators kontinuierlich durchgeführt wird.

Die Herstellung des TPU X erfolgt vorzugsweise ohne Katalysator.

Die erfindungsgemäßen Polyurethanelastomermischungen werden zur Herstellung von Formkörpem, Extrudaten, Folien und Spritzgussteilen eingesetzt. Die erfindungsgemäßen Polyurethanelastomermischungen können als sinterfähige und gut verlaufende Pulver hervorragend zur Herstellung von Flächengebilden und Hohlkörpern verwendet werden.

Als Diisocyanate A) können neben 1,6-Hexamethylendiisocyanat weitere aliphatische und/oder cycloaliphatische Diisocyanate eingesetzt werden (vgl. HOUBEN-WEYL "Methoden der organischen Chemie, Band 20, Makromolekulare Stoffe", Georg Thieme Verlag, Stuttgart, New York 1987, S. 1587 - 1593). Beispiele sind Ethylendiisocyanat, 1,4-Tetramethylendiisocyanat, 1,12-Dodecandiisocyanat, Cyclobutan-diisocyanat, Cyclohexan-1,3 und -1,4-Diisocyanat sowie beliebige Gemische dieser Isomeren, 1-Isocyanato-3,3,5-trimethyl-5-isocyanatomethyl-cyclohexan, 2,4-und 2,6-Hexahydrotoluylen-diisocyanat sowie beliebige Gemische dieser Isomeren, Hexahydro-1,3- und/oder -1,4-phenylendiisocyanat, Perhydro-2,4'- und/oder -4,4'diphenylmethandiisocyanat und Norboman-Diisocyanate (z.B. US-A 3 492 330). Bevorzugt neben 1,6-Hexamethylendiisocyanat (HDI) sind cycloaliphatische Diisocyanate, wie 1-Isocyanat-3,3,5-trimethyl-5-isocyanatomethylcyclohexan (IPDI) und Perhydro-2,4'- und/oder -4,4'-diphenylmethandiisocyanate (H₁₂ MDI).

Gegebenenfalls können auch höherfunktionelle Isocyanate wie z.B. das Isocyanurat des HDI (Desmodur® N 3300, Bayer AG) oder das Trimere des IPDI (Desmodur® Z 4300, Bayer AG) mitverwendet werden. Dabei ist jedoch darauf zu achten, dass eine mittlere Funktionalität von zwei nicht wesentlich überschritten wird, damit die Polyurethane thermoplastisch verarbeitet werden können. Gegebenenfalls müssen Reaktionspartner mit höherer Funktionalität durch Mitverwenden anderer Reaktionspartner mit einer niedrigeren Funktionalität als zwei wieder ausgeglichen werden. Hierfür geeignete monofunktionelle Isocyanate sind z.B. Stearylisocyanat und Cyclohexylisocyanat.

Als Komponente B) werden bevorzugt Polyesterpolyole mit einem zahlenmittleren Molekulargewicht zwischen 600 und 5000 g/mol, bevorzugt zwischen 700 und 4200 g/mol, eingesetzt.

Geeignete Polyester sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen Carbonsäuren oder deren veresterungsfähigen Derivaten. Die Polycarbonsäuren können aliphatischer, cycloaliphatischer, aromatischer und/oder heterocyclischer Natur sein, z.B. durch Halogenatome, substituiert und/oder ungesättigt sein.

Als Beispiele für solche Carbonsäuren und deren Derivate seien genannt: Bernsteinsäure, Adipinsäure, Phthalsäure, Isophthalsäure, Phthalsäureanhydrid, Tetrahydrophthalsäureanhydrid, Hexahydrophthalsäureanhydrid, Tetrachlorphthalsäureanhydrid, Endo-methylentetrahydrophthal-säureanhydrid, Maleinsäureanhydrid, Fumarsäure, dimerisierte und trimerisierte ungesättigte Fettsäuren, gegebenenfalls in Mischung mit monomeren ungesättigten Fettsäuren, Terephthalsäuredimethylester und Terephthalsäurebisglykolester.

Als mehrwertige Alkohole kommen z.B. Ethylenglykol, Propylenglykol-(1,2) und -(1,3), Butylenglykol-(1,4) und -(2,3), Hexandiol-(1,6), Octandiol-(1,8), Neopentylglykol, 1,4-Bis(hydroxymethyl)cyclohexan, Trimethylolpropan, Trimethylolethan, ferner Di-, Tri-, Tetra- und höhere Polyethylenglykole, Di- und höhere Polypropylenglykole sowie Di- und höhere Polybutylenglykole in Frage. Die Polyester können anteilig endständige Carboxylgruppen aufweisen. Auch Polyester aus Lactonen, z.B. ε-Caprolacton, oder aus Hydroxycarbonsäuren, z.B. ω-Hydroxycapronsäure, sind einsetzbar. Es können jedoch auch die aus der Fettchemie bekannten hydroxyfunktionellen Polyester wie z.B. Rizinusöl und dessen Umesterungsprodukte verwendet werden.

Gegebenenfalls können neben Polyesterdiolen andere Polyole eingesetzt werden zum Beispiel Polycarbonatdiole, Polyetherdiole und Gemische daraus.

Als Hydroxylgruppen aufweisende Polycarbonate kommen solche der an sich bekannten Art in Betracht, die z.B. durch Umsetzung von Diolen wie Propandiol-(1,3), Butandiol-(1,4) und/oder Hexandiol-(1,6), Diethylenglykol, Triethylenglykol, Tetraethylenglykol oder Thiodiglykol mit Diarylcarbonaten, z.B. Diphenylcarbonat oder Phosgen hergestellt werden können (DE-A 1 694 080, 2 221 751).

Neben den Polyesterpolyolen und den Polycarbonatdiolen können auch Gemische aus Polyetherpolyolen und Polyesterpolyolen und Gemische aus Polyetherpolyolen Polycarbonatdiolen mit jeweils einem zahlenmittleren Molekulargewicht zwischen 600 und 5000 g/mol, bevorzugt 700 und 4200 g/mol eingesetzt werden.

Geeignete Polyetherdiole können dadurch hergestellt werden, dass man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Popylenoxid, Epichlorhydrin und 1,2-Butylenoxid und 2,3-Butylenoxid. Vorzugsweise werden Ethylenoxid, Propylenoxid und Mischungen aus 1,2-Propylenoxid und Ethylenoxid eingesetzt. Die Alkylenoxide können einzeln alternierend nacheinander oder als Mischungen verwendet werden. Als Startermoleküle kommen beispielsweise in Betracht: Wasser, Aminoalkohole wie N-Alkyl-diethanolamine, beispielsweise N-Methyl-diethanolamin und Diole, wie Ethylenglykol, 1,3 Propylenglykol, 1,4-Butandiol und 1,6-Hexandiol. Gegebenenfalls können auch Mischungen von Startermolekülen eingesetzt werden.

Geeignete Polyetherdiole sind ferner die hydroxylgruppenhaltigen Polymerisationsprodukte des Tetrahydrofurans. Es können auch trifunktionelle Polyethether in Anteilen von 0 bis 30 Gew.-% bezogen auf die bifunktionellen Polyether, eingesetzt werden, jedoch höchstens in solcher Menge, dass ein thermoplastisch verarbeitbares Produkt entsteht. Die im wesentlichen linearen Polyetherdiole besitzen Molekulargewichte von 600 bis 5000, bevorzugt von 700 bis 4200 g/mol. Sie können sowohl einzeln als auch in Form von Mischungen untereinander zur Anwendung kommen. Bevorzugt sind hydroxylgruppenhaltige Polymerisationsprodukte des Tetrahydrofurans und Polyetherdiole auf Basis Ethylenoxid und/oder Propylenoxid, z.B. Impact® Polyether der Fa. Bayer AG.

Besonders bevorzugt sind Polyester aus Adipinsäure, Butandiol, Hexandiol, und Neopentylglykol mit einem mittleren Molekulargewicht zwischen 700 und 4200 g/mol.

Als Kettenverlängerungsmittel C) werden aliphatische Diole und/oder Diamine mit einem Molekulargewicht von 60 bis 500 g/mol eingesetzt, vorzugsweise aliphatische Diole mit 2 bis 14 Kohlenstoffatomen, wie z.B. Ethandiol, 1,6-Hexandiol, Diethylenglykol, Dipropylenglykol und insbesondere 1,4-Butandiol, oder (cyclo)aliphatische Diamine, wie z.B. Isophorondiamin, Ethylendiamin, 1,2-Propylendiamin, 1,3-Propylendiamin, N-Methyl-propylen-1,3-Diamin, N,N'-Dimethyl-ethylendiamin. Geeignet sind auch Diester der Terephthalsäure mit Glykolen mit 2 bis 4 Kohlenstoffatomen und Hydroxyalkylenether des Hydrochinons. Es können auch Gemische der oben genannten Kettenverlängerer eingesetzt werden. Daneben können auch kleinere Mengen an Triolen zugesetzt werden, jedoch höchstens in solcher Menge, dass ein thermoplastisch verarbeitetes Produkt entsteht. Besonders bevorzugt als Kettenverlängerer C) sind 1,4-Butandiol und 1,6-Hexandiol.

Weiterhin können in geringen Mengen auch übliche monofünktionelle Verbindungen eingesetzt werden, z.B. als Kettenabbrecher oder Entformungshilfen.

Beispielhaft genannt seien Alkohole wie Oktanol und Stearylalkohol oder Amine wie Butylamin und Stearylamin.

Als Kettenverlängerer H) werden aliphatische Diole mit einem Molekulargewicht von 62 bis 300 g/mol eingesetzt, vorzugsweise aliphatische Diole mit 2 bis 14 Kohlenstoffatomen wie z.B. Ethandiol, 1,6-Hexandiol, 1,4-Butandion und 1,2-Propandiol. Besonders bevorzugt als Kettenverlängerer H) sind 1,4-Butandiol und 1,6-Hexandiol, gegebenenfalls in Abmischung mit bis zu 20 Gew.-% Kettenverlängerer mit einem mittleren Molekulargewicht von 62 bis 300 g/mol.

Als Kettenabbrecher I) werden monofunktionelle Alkohole mit einem Molekulargewicht von 32 bis 300 g/mol eingesetzt, vorzugsweise Methanol, Ethanol, Propanol, 1-Butanol, 1-Hexanol, 2-Ethylhexanol-1, Cyclohexanol und 1-Octadecanol.

Bei der Durchführung des erfindungsgemäßen Verfahren geht man vorzugsweise so vor, dass das Polyol/Polyolgemisch B) und der Kettenverlängerer C) kontinuierlich gemischt werden und danach mit dem Diisocyanat / Diisocyanatgemisch A) intensiv vermischt werden (One Shot-Verfahren) und vor, während oder bevorzugt nach der Reaktion dieser Komponenten zum TPU Y in einem Extruder das separat hergestellte niedermolekulare Additiv TPU X der Schmelze zugeführt wird und das so erhaltene Produkt gegebenenfalls granuliert wird.

Bevorzugt wird die Reaktion zum TPU Y in Gegenwart eines Katalysators durchgeführt.

Zur kontinuierlichen Mischung werden bevorzugt Statikmischer eingesetzt (vgl. DE-C 23 28 795).

Die erfindungsgemäß eingesetzten thermoplastischen Polyurethane TPU Y können auch nach dem Prepolymerverfahren hergestellt werden, wobei zunächst das Diisocyanat/Diisocyanatgemisch mit dem Polyol/Polyolgemisch gemischt und unter Erhalt eines Prepolymeren zur Reaktion gebracht wird und danach die Kettenverlängerung kontinuierlich durchgeführt wird.

Vorzugsweise wird bei der kontinuierlichen Herstellung der thermoplastischen Polyurethane gemäß dem Extruder- oder Bandverfahren ein Katalysator eingesetzt. Geeignete Katalysatoren sind nach dem Stand der Technik bekannte und übliche tertiäre Amine, wie z.B. Triethylamin, Dimethylcyclohexylamin, N-Methylmorpholin, N,N'-Dimethyl-piperazin, 2-(Dimethylaminoethyl)-ether, Diazabicyclo-[2,2,2]-octan und ähnliche sowie insbesondere organische Metallverbindungen wie Titansäureester, Eisenverbindungen, Zinnverbindungen, z.B. Zinndiacetat, Zinndioctoat, Zinndilaurat oder die Zinndiakylsalze aliphatischer Carbonsäuren wie Dibutylzinndiacetat, Dibutylzinndilaurat oder ähnliche.

Bevorzugte Katalysatoren sind organische Metallverbindungen, insbesondere Titansäureester, Eisen- oder Zinnverbindungen. Ganz besonders bevorzugt ist Dibutylzinndilaurat.

Neben den erfindungsgemäß verwendeten Reaktionskomponenten, UV-Stabilisatoren und Katalysatoren können auch weitere Hilfsmittel und Zusatzstoffe zugesetzt werden. Genannt seien beispielsweise Gleitmittel, wie Fettsäureester, deren Metallseifen, Fettsäureamide und Siliconverbindungen, Antiblockmittel, Inhibitoren, Stabilisatoren gegen Hydrolyse, Hitze und Verfärbung, Flammschutzmittel, Farbstoffe, Pigmente, anorganische Füllstoffe und Verstärkungsmittel, die nach dem Stand der Technik hergestellt werden und die auch mit einer Schlichte beaufschlagt sein können. Nähere Angaben über die genannten Hilfs- und Zusatzstoffe sind der Fachliteratur zu entnehmen, beispielsweise J. H. Saunders, K. C Frisch: "High Polymers", Band XVI, Polyurethane, Teil 1 und 2, Interscience Publishers 1962 bzw. 1964, R. Gächter, H. Müller (Ed.): Taschenbuch der Kunststoff-Additive, 3. Ausgabe, Hanser Verlag, München 1989 oder DE-A-29 01 774.

Die Gleitmittel werden vorzugsweise in Mengen von 0,1 bis 1,0 Gew.-%, bezogen auf A) + B) + C) zugesetzt. Die Antioxidationsmittel finden vorzugsweise in Mengen von 0,1 bis 0,7 Gew.-%, bezogen auf A) + B) + C) Anwendung.

Die Herstellung des erfindungsgemäß eingesetzten Additivs TPU X erfolgt separat vorzugsweise in einer geeigneten Rührapparatur. Dabei wird folgendermaßen vorgegangen:

Man legt Hexamethylendiisocyanat (HDI) G) vor und tropft zunächst den Kettenabbrecher I) bei erhöhter Temperatur zu. Nach erfolgter Reaktion (Abklingen der exothermen Reaktion) wird der Kettenverlängerer H) zudosiert und gegebenenfalls die Temperatur erhöht. Man rührt so lange nach, bis die Schmelze NCO-frei ist (IR-Kontrolle). Im allgemeinen arbeitet man in der Endphase der Reaktion bei 150 bis 200°C und wählt die Mengenverhältnisse so, dass auf ein mol des vorlegten Diisocyanats G) 0,5 bis 0,95 mol des Kettenverlängers H) zudosiert werden.

Die dünnflüssige Schmelze wird aus dem Reaktionsgefäß ausgegossen und erstarrt beim Abkühlen unter Kristallisation. Das Produkt wird zerkleinert und kann zusätzlich gemahlen werden.

Eine weitere Möglichkeit besteht darin, die dünnflüssige Schmelze auf einem Kühlband oder einer Kühlwalze abzulegen und nach dem Erstarren zu zerkleinern, zu granulieren und/oder zu mahlen.

Das erfindungsgemäß eingesetzte TPU Y wird bevorzugt kontinuierlich hergestellt, wobei das Polyol/Polyolgemisch B) und der Kettenverlängerer C) kontinuierlich gemischt werden (z.B. mittels Statikmischer) und dieses Gemisch mit HDI A) gemischt (z.B. mittels Statikmischer) und zur Reaktion gebracht wird. In einem weiteren Schritt wird das zweite von HDI verschiedene Diisocyanat (falls vorhanden) A) eingemischt. Die Einmischung des zweiten Diisocyanates kann z.B. durch Statikmischer, Rohrmischer oder auch im Extruder erfolgen. Man wählt die Mengenverhältnisse so, dass bevorzugt weiche, lichtstabile TPU Y erhalten werden, vorzugsweise mit 13 - 21 Gew.-%, besonders bevorzugt mit 14 - 18 Gew.-% Hartsegmentanteilen. Das Hartsegment im TPU wird üblicherweise aus der eingesetzten Menge Diisocyanat und Kettenverlängerer, bezogen auf die Gesamtmasse des TPU berechnet.

Das Polyol-Kettenverlängerer-Gemisch [B) + C)] und das Diisocyanat A) sollten vorzugsweise vor der Mischung einen Temperaturunterschied von < 20°C, bevorzugt < 10°C, besonders bevorzugt < 5°C aufweisen. Die absoluten Rohstoff-Temperaturen sollten vorzugsweise zwischen 60°C und 150°C, besonders bevorzugt zwischen 80°C und 120°C liegen. Das zweite von HDI verschiedene Diisocyanat A), soweit vorhanden, kann auch zuerst mit dem Polyol-Kettenverlängerer-Gemisch [B) + C)] zur Reaktion gebracht werden. Danach wird dann HDI A) eingemischt und ebenfalls zur Reaktion gebracht.

Die Zugabe des Additivs TPU X kann nach der Polymerisation durch Compoundierung oder auch während der Polymerisation erfolgen. Während der Polymerisation können auch Antioxidationsmittel und UV-Stabilisatoren zudosiert werden, die vorzugsweise vorher im Polyol B) gelöst werden. Es können aber auch Gleitmittel und Stabilisatoren beim Extruderverfahren, beispielsweise im zweiten Teil der Schnecke zugegeben werden.

Die erfindungsgemäßen lichtstabilen TPU-Blends können zur Herstellung von Formkörpern, insbesondere zur Herstellung von Extrudaten (z.B. Folien) und Spritzgießteilen eingesetzt werden. Durch ihre Eigenschaften sind sie besonders im Automobilinnenbereich bevorzugt. Des weiteren können die erfindungsgemäßen TPU als sinterfähiges Pulver zur Herstellung von Flächengebilden und Hohlkörpern verwendet werden.

Die erfindungsgemäßen lichtstabilen Blends aus thermoplastischen Polyurethanelastomeren, bestehend aus 80 bis 98 Gew.-% eines aliphatischen TPU Y bevorzugt mit einem zahlenmittleren Molekulargewicht von 20 000 g/mol bis 100 000 g/mol und 2 bis 20 Gew.-% eines separat hergestellten Additivs TPU X vorzugsweise mit einem zahlenmittleren Molekulargewicht von 462 g/mol bis 6000 g/mol zeichnen sich gegenüber den Produkten des Standes der Technik durch eine ganze Reihe von vorteilhaften Eigenschaften aus:
1. Bei den erfindungsgemäßen Mischungen ist die Kristallisationstendenz so beschleunigt, dass extrudierbare, spritzbare und blasbare Produkte mit schneller Kristallisation beim Abkühlen erhalten werden. Die Kristallisation setzt in der Regel schon bei 140°C ein.
2. Die erfindungsgemäßen TPU-Mischungen besitzen gegenüber den nach dem Stand der Technik nicht modifizierten TPU einen abgesenkten MFI (melt flow index).
3. Die erfindungsgemäßen TPU-Mischungen besitzen gegenüber den TPU nach dem Stand der Technik einen erhöhten Wärmestand und einen erhöhten Modul.
4. Durch die Abmischung des TPU Y mit dem TPU X wird die Härte der TPU-Mischung kaum verändert, so dass insgesamt weiche, lichtechte TPU-Mischungen mit vorzüglicher Verarbeitbarkeit aus der Schmelze und schneller Entformbarkeit erhalten werden.
5. Die erfindungsgemäßen, lichtstabilen TPU-Blends können auch in neuen Anwendungen zum Einsatz gelangen, z.B. nach Formulierung mit Wirkstoffen zur Bekämpfung von Parasiten auf, am oder in der Umgebung von Tieren.

Die Erfindung soll anhand der nachfolgenden Beispiele näher erläutert werden.

### Beispiele

### Beispiel 1 (TPU X)

84 g (0,5 mol) Hexamethylendiisocyanat wurden vorgelegt und bei 80 bis 90°C werden innerhalb von 1 Stunde 18,4 g (0,4 mol) Ethanol (Kettenabbrecher) zugetropft. Anschließend tropfte man innerhalb von 1 Stunde 27 g (0,3 mol) 1,4-Butandiol ein. Dabei wurde die Temperatur bis auf 160°C gesteigert. Es wurde bei 160°C nachgerührt (ca. 30 Minuten), bis die Schmelze kein NCO mehr enthielt (IR-Spektroskopie). Nach dem Ausgießen auf ein Teflonblech erstarrte die Schmelze sehr schnell. Der Schmelzpunkt betrug 150 bis 156°C.

### Beispiel 2 (TPU Y)

216,68 g (0,127 mol) eines Polyesters aus Adipinsäure sowie 1,6-Hexandiol und Neopentylglykol (im Molverhältnis 0,65 : 0,35) mit einem durchschnittlichen Molekulargewicht von 1706 g/mol und 2 Gew.-% OH-Gruppen und 107,16 g (0,054 mol) eines Polyesters aus Adipinsäure und Ethylenglykol mit einem durchschnittlichen Molekulargewicht von 1984 g/mol und 1,7 Gew.-% OH-Gruppen wurden gemischt und 30 Minuten bei 120°C und 15 mbar getrocknet. Das Gemisch wurde unter Stickstoff auf 160°C erhitzt und nacheinander 8,91 g (0,099 mol) 1,4-Butandiol und 47,12 g (0,28 mol) Hexamethylendiisocyanat zugegeben. Die Reaktion war exotherm und erwärmte sich bis auf 180°C. 10 Minuten nach Isocyanat-Zugabe wurde die Schmelze auf ein Teflonblech gegossen und 20 Stunden im Trockenschrank bei 80°C nachgeheizt. Das Produkt war NCO-frei (IR-Spektroskopie). Man erhielt auf diese Weise ein weiches, lichtstabiles TPU Y mit einer Shore-A Härte von ca. 72 (Prüfmethode DIN 53505).

### Beispiel 3 (TPU-Blend)

1900 g des TPU Y aus Beispiel 2 wurden mit 100 g des TPU-X aus Beipiel 1 nach Zerkleinern zu unregelmäßigen Granulaten trocken vorgemischt und auf einem Laborextruder HZSK der Firma HAAKE bei 120 - 140°C homogenisiert. Der aus dem Extruder austretende Strang wurde nach Unterwasserkühlung mittels Stranggranulierung zu ca. 2 mm langen Zylindergranulat aufgearbeitet und anschließend im Vakuumtrockenschrank 1 h bei 60°C getrocknet.

### Beispiel 4 (TPU-Blend)

Man arbeitete wie im Beispiel 3 beschrieben nur mit dem Unterschied, dass 1980 g des TPU Y aus Beispiel 2 mit 20 g TPU-X aus Beispiel 1 zur Homogenisierung auf dem Extruder eingesetzt wurden.

### Physikalische Untersuchungen:

Thermogravimetrische Analyse (TGA)
- Prinzip:: Verfolgung der Massenänderung beim Aufheizen in definierter Atmosphäre (hier: Stickstoff); Größe und Geschwindigkeit der Massenänderungen wurden dabei als Funktion der Temperatur erfasst. Ausgewertet wurde der relative Masseverlust (auf 100 % Anfangs-masse bezogen).
- TGA-Gerät:: Thermowaage TGS-7 (Fa. Perkin-Elmer)

Aufheizung von Raumtemperatur auf +600°C, Heizrate 20K/min; Stickstoffspülung, Einwaagen zwischen 4,4 mg und 5,1 mg Probenmasse in offenem Pt-Tiegel.

Standardauswertung: relative Massenabnahmen, Verflüchtigung, Zersetzung

### Differentialkalorimetrie (DSC)

- Prinzip:: Messung der Wärmetönung bei physikalischen Umwandlungen (Glasübergang, Schmelzen, Verdampfen) und chemischen Änderungen (Oxidation, Vernetzung). Es wurde die Differenz der zugeführten Wärmemengen in die Prüfsubstanz und in ein Inertmaterial (Referenz) als Temperaturfunktion gemessen; Probe und Referenz wurden dem gleichen geregelten Temperatur-/Zeit-Programm unterworfen.
- DSC-Gerät:: Differential-Scanning-Calorimeter DSC-2 (Fa. Perkin-Elmer)

Zwei aufeinander folgende Aufheizungen von -100°C auf +200°C; Heizrate 20K/min, Temperung am Ende der 1. Aufheizung (10 min. bei 200°C), langsame Abkühlung im Kalorimeter mit 10K/min auf die Startemperatur von -100°C, Stickstoffspülung, Einwaagen 21 mg (+/- 1 mg) in Normalkapseln.
- Standardauswertung:: Glasübergang (Glastemperatur Tg= Mitte der Glas-stufe),
Schmelzverhalten (Schmelztemperaturen Tₘ [°C] als Peakmaxima, Schmelzwärmen ΔH [J/_{g}] als Integral zwischen der Basislinie und dem durch ein definiertes Temperaturintervall begrenzten Kurvenzug der Mess-kurve).

Zur Bestimmung der Rekristallisation (DSC-Methode) wurden aus den Granulaten der Beispiele 2, 3 und 4 Probeplatten hergestellt (18 x 18 cm x 1 cm dick). Anhand von DSC-Untersuchungen wurde der Einfluss des TPU X auf die Rekristallisation ermittelt.

### Ergebnisse:

Es wurde von allen Mustern thermogravimetrisch (TGA) das Verflüchtigungs- und das Zersetzungsverhalten bestimmt. Dazu wurden die Proben in einer Thermowaage von Raumtemperatur bis 600°C aufgeheizt und der relative Massenverlust (bezogen auf Startmasse normiert) ermittelt. Die ermittelten TGA-Kurven der Proben unterschieden sich nur wenig. Alle drei Proben waren zersetzungsstabil bis etwa 260°C, oberhalb von 260°C begann die thermische Zersetzung. Die Menge flüchtiger Substanzen bei 200°C lag unter 0,5 %. Dieser relativ geringe Massenverlust war für eine DSC-Aufheizung unkritisch. Eine DSC-Aufheizung bis 200°C war daher möglich.

### Messprogramm:

1. Einlegen der Proben in die DSC bei Raumtemperatur
2. Schnelle Abkühlung (320 K/min) auf die Starttemperatur -100°C
3. Aufheizung von -100°C auf +200°C mit konstanter Heizrate 20 K/min
4. 10 Minuten isotherme Temperung bei 200°C zum Aufschmelzen der kristallinen Anteile
5. Langsame Abkühlung (10K/min) von +200°C auf-100°C
6. Erneute Aufheizung von -100°C auf +200°C mit konstanter Heizrate 20K/min

Die Proben aus den Beispielen 2, 3 und 4 waren in der 1. Aufheizung, d. h. im Alieferungszustand, im wesentlichen gleich. Die Glastemperatur lag bei -49°C. Zwischen Raumtemperatur und etwa 150°C fand man einen strukturierten Schmelzbereich, dieser war bei der Probe aus Beispiel 3 bis etwa 180°C verbreitet.

Nach isothermer Temperung (10 min./200°C) wurden die Proben langsam abgekühlt und das Abkühlverhalten registriert. Die Probe TPU Y aus Beispiel 2 zeigte keinen Rekristallisationseffekt während der Abkühlung. Die Probe aus Beispiel 4 zeigte nur einen geringen Effekt bei 44,2°C (-3,166 J/_{g}). Die Probe aus Beispiel 3 zeigte dagegen einen ausgeprägten Effekt, der bereits ab 140°C begann (-7,188 J/_{g}).

Die nachfolgende 2. Aufheizung gab Hinweise auf den Grad der während der Abkühlung erreichten Kristallisation. Das TPUY aus Beispiel 2 zeigte bei 105,9°C einen endothermen Effekt von +6,575 J/_{g}.

Die Probe aus Beispiel 4 zeigte einen ähnlichen Kurvenverlauf wie TPU Y nur mit dem Unterschied, dass der endotherme Effekt bei 112,1°C einen Wert von +4,665 J/_{g} aufwies. Erst die erfindungsgemäße Mischung aus TPU X und TPU Y des Beispiels 3 zeigte einen ausgeprägten endothermen Effekt bei 127,0°C von +11,474 J/_{g}.

Unter den gewählten Temperungs- und Abkühlbedingungen konnte demnach die Probe aus Beispiel 3 fast vollständig kristallisieren.

### Dynamisch-mechanisch Analyse (DMS)

Messungen des komplexen E*-Moduls erfolgten an den Proben TPU Y aus Beispiel 2 und der erfindungsgemäßen Mischung aus TPU X und TPU Y des Beispiels 3.

Aus den Spritzplatten wurden Rechtecke (30 mm x 10 mm x 1 mm) gestanzt. Diese Prüfplatten wurden unter konstanter Vorlast - gegebenenfalls vom Speichermodul abhängig - periodisch mit sehr kleinen Deformationen angeregt und die auf die Einspannung einwirkende Kraft als Funktion der Temperatur und Anregungsfrequenz gemessen. Die zusätzlich aufgebrachte Vorlast diente dazu, im Zeitpunkt negativer Deformationsamplitude die Probe noch ausreichend gespannt zu halten.

Die Erweichungstemperatur T wurde als charakteristische Temperatur für den Wärmestand bei E'= 2M Pa bestimmt.

Die DMS-Messungen wurden mit dem Seiko DMS Modell 210 der Firma Seiko mit 1 HZ im Temperaturbereich von -150°C bis +200°C mit einer Heizrate von 2°C/min durchgeführt.

### Ergebnisse:

Bei den Messungen des komplexen E*-Moduls zeigten beide Modulkurven einen schmalen Glasübergang bei -48°C und ein sich anschließendes, ausgeprägtes Modulplateau, welches allerdings bei beiden Proben auf unterschiedlich hohem Niveau lag. Bei 60°C fand man bei beiden Modulkurven eine deutliche Modulstufe und eine sich anschließende 2stufige Erweichung der Proben. Die erfindungsgemäße Probe aus Beispiel 3 zeigte einen deutlich höherverlaufenden Modul mit demzufolge höherem Wärmestand der Probe.

| TPU Y (Beispiel 2) | | TPU-X/TPU Y (Beispiel 3) | |
|---|---|---|---|
| TG | -48°C | TG | -48°C |
| E' [10°C] | 41 MPa | E' [10°C] | 71 MPa |
| E' [36°C] | 35 MPa | E' [36°C] | 64 MPa |
| T [2 MPa] : | 101°C | T [2MPa] | 117°C |

### Schmelzindex (MFI)

Der Schmelzindex der Proben aus Beispiel 2 und Beispiel 3 wurde gemäß DIN 53 735/B, Vorwärmzeit 15 min ermittelt.

| | Beispiel 2 TPU Y | Beispiel 3 TPU X / TPU Y |
|---|---|---|
| Schmelzindex (MFI 180/5) | 1 g / 10 min | 12 g / 10 min |

### Beispiele 5 bis 8

Die TPU Y wurden folgendermaßen kontinuierlich hergestellt:

Das Gemisch aus Polyol B), Kettenverlängerer C) und Dibutylzinndilaurat wurde in einem Kessel unter Rühren aus ca. 110°C erhitzt und zusammen mit dem entsprechenden Diisocyanat (siehe Tabelle 1), welches mittels Wärmetauscher auf ca. 110°C erhitzt wurde, durch einen Statikmischer der Firma Sulzer (DN 6 mit 10 Mischelementen und einer Scherrate von 500 s⁻¹) intensiv gemischt und dann in den Einzug einer Schnecke (ZSK 32) geführt.

Soweit erforderlich wurde das zweite von HDI verschiedene Diisocyanat in die 1. Zone der Schnecke (ZSK 32) eingeführt. Das gesamte Gemisch reagierte auf dem Extruder bei 120 bis 200°C.

**Tabelle 1**

| Zusammensetzung der TPU Y 5 bis 8: | | | | | | | | | | |
|---|---|---|---|---|---|---|---|---|---|---|
| TPU-Y | HDI mol/g | IPDI mol/g | HPI/IPDI mol %/ mol % | DE 2000 mol/g | PE 225B mol/g | PE 170HN mol/g | 1,4 BDO mol/g | 1,6 HDO mol/g | DBTL ppm | KZ |
| 5 | 2,8/470 | - | 100/0 | - | 0,6/1350 | 0,9/1530 | 0,65/59 | 0,65/77 | 40 | 100 |
| 6 | 2,7/454 | 0,3/67 | 90/10 | - | - | 1,5/2550 | 1,5/135 | - | 40 | 100 |
| 7 | 2,7/454 | 0,3/67 | 90/10 | 0,75/1500 | - | 0,75/1275 | 1,5/135 | - | 40 | 100 |
| 8 | 5,18/870 | - | 100/0 | 1,0/2000 | - | 2,35/3995 | 1,83/165 | - | 40 | 100 |

Die Mengen an DBTL sind bezogen auf die Polyolmischung.
- DBTL:: Dibutylzinndilaurat
- DE 2000:: Polyethandioladipat mit einem zahlenmittleren Molekularge-wicht Mₙ 2000 g/mol
- PE 225B:: Polybutandioladipat mit einem zahlenmittleren Molekularge-wicht Mₙ 2250 g/mol
- PE 170 HN:: Polyester aus Adipinsäure, Hexandiol und Neopentylglykol (im Molverhältnis 0,65 : 0,35) mit einem zahlenmittleren Molekulargewicht Mₙ 1700 g/mol
- 1,4 BDO:: 1,4-Butandiol
- 1,6 HDO:: 1,6-Hexandiol
- HDI:: Hexamethylendiisocyanat
- IPDI:: Isophorondiisocyanat
- KZ:: Kennzahl

In der letzten Zone der ZSK32 wurden auf 95 Gew.-Teile TPU-Y (5 bis 8) 5 Gew.-Teile TPUX gemäß Beispiel 1 zudosiert und der aus der Schnecke austretende Strang nach Wasserkühlung granuliert. Alle erfindungsgemäßen Blends aus TPUX/TPUY zeigten beim Abkühlen schnelle Kristallisation, so dass sie sich problemlos granulieren ließen.

Zur Verbesserung der Gebrauchseigenschaften können die erfindungsgemäßen Blends zusätzlich Additive enthalten. Hierfür kommen beispielsweise in Frage:
- Irganox® 1010:: Tetrakis[methylen-(3,5-di-tert.-butyl-4-hydroxy-hydrocinnamate)]-methan (Fa. Ciba-Geigy)
- Irganox® 245:: Ethylenbis(oxyethylen)bis-(3-tert-butyl-4-hydroxy-5-methyl--hydrocinnamate) (Fa. Ciba Geigy)
- Tinuvin® 328:: 2-(2'-Hydroxy-3'-5'-di-tert-amylphenyl)benzotriazol (Fa. Ciba-Geigy)
- Tinuvin® 622:: Dimethylsuccinatpolymer mit 4-Hydroxy-2,2,6,6-tetramethyl--1-piperazin ethanol (Fa. Ciba Geigy)
- Loxiol® G78:: Stearinsäure (Fa. Hoechst)
- Stabaxol ® P 200:: Aromatisches Polycarbodiimid (Fa. Rhein-Chemie)
- Zinkstearat:: Fa. Aldrich

### Vergleichsbeispiel 9

Man arbeitete wie im Beispiel 8 beschrieben, nur mit dem Unterschied, dass dem TPUY8 kein TPU X1 zudosiert wurde. Nach erfolgter Reaktion auf der Schnecke ZSK 32 bei 140°C und einer Austrittstemperatur von 120°C erhielt man einen klebrigen TPU-Y8 Strang, der sich trotz intensiver Wasserkühlung nicht granulieren ließ.

### Beispiel 10 (TPU X)

### Zusammensetzung von verschiedenen TPU X

Die Herstellung der TPU X 2 bis 9 erfolgte gemäß der Herstellungsvorschrift für das TPU X 1 aus Beispiel 1.

**Tabelle 2**

| | **Kettenabbrecher** | **Kettenverlängerer** | **Diisocyanat** | **Mn (ber.)** | **Schmelzpunkt** |
|---|---|---|---|---|---|
| TPU-X 1 (Bsp.1) | 2 mol Ethanol | 1,5 mol 1,4-BDO | 2,5 mol HDI | 647 g/mol | 150 - 156°C |
| TPU-X 2 | 2 mol 1-Hexanol | 1,5 mol 1,6-HDO | 2,5 mol HDI | 801 g/mol | 149 - 153°C |
| TPU-X 3 | 2 mol Ethylhexanol | 5 mol 1,4-BDO | 6 mol HDI | 1718 g/mol | 160 - 164°C |
| TPU-X 4 | 2 mol 1-Butanol | 1,5 mol 1,4-BDO | 2,5 mol HDI | 703 g/mol | 159 - 163°C |
| TPU-X 5 | 2 mol 1-Hexanol | 1,5 mol 1,4-BDO | 2,5 mol HDI | 759 g/mol | 164 - 167°C |
| TPU-X 6 | 2 mol Ethanol | 1,5 mol 1,6-HDO | 2,5 mol HDI | 689 g/mol | 145 - 148°C |
| TPU-X7 | 2 mol Ethylhexanol | 10 mol 1,4-BDO | 11 mol HDI | 3008 g/mol | 170 - 174°C |
| TPU-X 8 | 2 mol Ethylhexanol | 20 mol 1,4-BDO | 21 mol HDI | 5588 g/mol | ca. 180°C |
| TPU-X 9 | 2 mol Ethanol | 1 mol 1,6-HDO | 2 mol HDI | 546 g/mol | 138 - 142°C |

Die Herstellung des TPU X 10 erfolgte gemäß Beispiel 1 mit dem Unterschied, dass kein Kettenverlängerer zugesetzt wurde.

| Vergleichsbeispiel (unwirksames TPU-X) | | | | |
|---|---|---|---|---|
| | Kettenabbrecher | Diisocyanat | Mₙ (ber) | Schmelz-punkt |
| TPU-X 10 (Vergleich) | 2 mol Ethanol | 1 mol HDI | 260 g/mol | 80 - 82°C |

### Beispiel 11

### Tests zur Ermittlung der Wirksamkeit von TPU-X in TPU Y

In einer 180°C heißen Metallform wurden die Komponenten TPU X und TPU Y in den in den Tabellen 3 und 4 angegebenen Mengenverhältnissen mit einem Holzstab zu einer homogenen Schmelze vermischt. Die Schmelze wurde anschließend auf einer mit einem 2 mm dicken Metallrahmen belegten Teflonplatte heiß abgelegt, mit einer weiteren Teflonplatte bedeckt und zu einer 2 mm dicken unregelmäßigen Folie von Hand verpresst. Nach 20 sec. wurde entformt und die Klebfreizeit gemessen (Folie an Folie). Metallrahmen und Teflonplatten hatten Raumtemperatur.

**Tabelle 3**

| **Vergleichsversuche** | | | |
|---|---|---|---|
| **Versuch** | **TPU-Y** | **TPU-X** | **Klebfreizeit** |
| A | 100 % aus Beispiel 2 | - | 112 Sek. |
| B | 95 % aus Beispiel 2 | 5 % TPU X 10 | > 180 Sek. |

**Tabelle 4**

| **Erfindungsgemäße Versuche** | | | |
|---|---|---|---|
| **Versuch** | **TPU-Y** | **TPU-X** | **Klebefreizeit** |
| C | 95 % aus Beispiel 2 | 5 % TPU-X 1 (Beispiel 1) | 33 Sek. |
| D | 95 % aus Beispiel 2 | 5 % TPU-X 3 | 32 Sek. |
| E | 97 % aus Beispiel 2 | 3 % TPU-X 3 | 34 Sek. |
| F | 98 % aus Beispiel 2 | 2 % TPU-X 3 | 38 Sek. |
| G | 99 % aus Beispiel 2 | 1 % TPU-X 3 | 53 Sek. |
| H | 95 % aus Beispiel 2 | 5 % TPU-X 7 | 34 Sek. |
| I | 95 % aus Beispiel 2 | 5 % TPU-X 8 | 34 Sek. |
| K | 95 % aus Beispiel 2 | 5 % TPU-X 9 | 58 Sek. |

Tabelle 3 zeigt im Versuch A den "Nullwert" des TPU Y ohne den Zusatz von TPU X. Der Versuch B macht deutlich, dass ein TPU X, das ohne Kettenverlängerer hergestellt wurde, als Blendpartner völlig ungeeignet ist.

Tabelle 4 zeigt dagegen in den Versuchen C bis K wie sich der Zusatz der TPU X zur Verkürzung der Klebefreizeit bei den erfindungsgemäßen Blends auswirkt.

## Patentansprüche

1. Lichtstabile, thermoplastische, aliphatische Polyurethanelastomermischungen bestehend aus 80 bis 98 Gew.-% eines aliphatischen, thermoplastischen Polyurethans (TPU Y), erhältlich aus gegebenenfalls unter Zugabe von Katalysatoren
A) 100 bis 60 mol-%, bevorzugt 100 bis 80 mol-% Hexamethylendiisocyanat (HDI) und 0 bis 40 mol-%, bevorzugt 0 bis 20 mol-% anderen aliphatischen Diisocyanaten,
B) Polyolen, bevorzugt difünktionellen Polyesterdiolen mit einem zahlenmittleren Molekulargewicht von 600 bis 5000 g/mol, vorzugsweise von 700 bis 4200 g/mol, und
C) Kettenverlängerern mit einem mittleren Molekulargewicht von 60 bis 500 g/mol
gegebenenfalls unter Zugabe von UV-Stabilisatoren D) in einer Menge von 0,4 bis 0,9 Gew.-%, bevorzugt 0,4 bis 0,8 Gew.-%, bezogen auf [A) + B) + C)], und weiteren üblichen Hilfs- und Zusatzstoffen (F),
wobei das Äquivalenzverhältnis von A) zu B) zwischen 1,5 : 1,0 und 6,0 : 1,0 beträgt und wobei die Kennzahl (gebildet aus dem mit 100 multiplizierten Quotienten der Äquivalentverhältnisse von Isocyanatgruppen und der Summe der Hydroxylgruppen aus Polyol und Kettenverlängerungsmittel) 95 bis 105 beträgt,
und 2 bis 20 Gew.-% eines niedermolekularen thermoplastischen Polyurethans (TPU X) erhältlich aus
G) Hexamethylendiisocyanat (HDI),
H) Diolen mit einem zahlenmittleren Molekulargewicht von 62 bis 300 g/mol und
I) monofünktionellen Alkoholen als Kettenabbrecher mit einem Molekulargewicht von 32 bis 300 g/mol,
wobei das Molverhältnis von G) zu H) zwischen 2 : 1 und 1,05 : 1, bevorzugt 1,7 : 1 bis 1,2 : 1 beträgt und wobei die Kennzahl (gebildet aus dem mit 100 multiplizierten Quotienten der Äquivalentverhältnisse von Isocyanatgruppen aus G) und der Summe der Hydroxylgruppen aus H) und I) 99 bis 101 beträgt.

2. Lichtstabile, thermoplastische Polyurethanelastomermischungen gemäß Anspruch 1, **dadurch gekennzeichnet, dass** das TPU Y ein zahlenmittleres Molekulargewicht von 20 000 g/mol bis 100 000 g/mol und das TPU X ein zahlenmittleres Molekulargewicht von 462 g/mol bis 6000 g/mol aufweisen.

3. Lichtstabile, thermoplastische Polyurethanelastomermischungen gemäß Anspruch 1 oder 2, **dadurch gekennzeichnet, dass** das TPU Y 13 bis 21 Gew.-%, bevorzugt 14 bis 18 Gew.-% Hartsegment (berechnet aus der eingesetzten Menge an Diisocyanat A) und Kettenverlängerer C), bezogen auf die Gesamtmasse TPU Y enthält.

4. Verfahren zur Herstellung der lichtstabilen, thermoplastischen Polyurethanelastomermischungen gemäß den Ansprüchen 1 bis 3, **dadurch gekennzeichnet, dass** B) und C) kontinuierlich oder diskontinuierlich gemischt werden und danach mit dem A) intensiv vermischt werden und vor, während oder bevorzugt nach der Reaktion der Komponenten A), B) und C) in einem Extruder das separat hergestellte TPU X zugegeben wird und das so erhaltene Produkt gegebenenfalls granuliert wird.

5. Verfahren gemäß Anspruch 4, **dadurch gekennzeichnet, dass** die Reaktion zur Herstellung des TPU Y in Gegenwart eines Katalysators kontinuierlich durchgeführt wird.

6. Verfahren gemäß Anspruch 4, **dadurch gekennzeichnet, dass** die separate Herstellung des TPU X ohne Katalysator durchgeführt wird.

7. Verwendung der lichtstabilen, thermoplastischen Polyurethanelastomermischungen gemäß den Ansprüchen 1 bis 3 zur Herstellung von Formkörpern, Extrudaten, Folien und Spritzgussteilen.

8. Verwendung der lichtstabilen thermoplastischen Polyurethanelastomermischungen gemäß den Ansprüchen 1 bis 3 als sinterfähige und gut verlaufende Pulver zur Herstellung von Flächengebilden und Hohlkörpern.
